# EUROPEAN PATENT APPLICATION

(11) **EP 1 561 613 A1**
(43) Date of publication of application: **10.08.2005**
(21) Application number: 05250631.8
(22) Date of filing: 04.02.2005
(51) Int. Cl.: B60G 17/052, B60G 17/015, B60T 17/02, F16F 15/20

(54) **Air suspension system**

(30) Priority: 06.02.2004 GB 0402721
(71) Applicant: Trelleborg AB (publ), 231 11 Trelleborg (SE)
(72) Inventor: Harrison, Andrew Colin, Fillongley, Coventry CV7 8EQ (GB); Saulitis, Paul, Cheylesmore, Coventry CV3 6HB (GB)
(74) Representative: Somervell, Thomas Richard

(57) **Abstract**

A vehicle air suspension system (10) comprises a source of compressed air (16, 18) coupled to one or more air springs (12, 14). A controller (50) controls flow of compressed air into and out of the air springs. The source comprises a plurality of compressors (16, 18) and the controller is responsive to receipt of signals from the vehicle and/or the air suspension system for controlling the compressors either together as a single unit, or individually, depending on the signals received.

## Description

The present invention relates to an air suspension system for vehicles.

Vehicle air suspension systems replace conventional steel springs with rubber air springs or pneumatic dampers. These offer the advantages of improved ride quality and, if electronically controlled, a facility for control of the vehicle height (more specifically the distance between the chassis and the axle) under varying load and dynamic conditions. Known systems employ a compressor, controlled by an electronic control unit (ECU) to supply compressed air in response to system demands.

A problem with such systems arises because the performance requirements for the system, in particular for the compressor(s) therein, place stringent demands on the system. The performance requirements depend on the specification of the air suspension system for the vehicle. For example, a vehicle manufacturer may require that a short time is taken to charge the air springs and/or the pneumatic dampers and/or a reservoir (if included in the system) with air. This is because the time taken for the vehicle to be raised between specified height levels (the 'response time') is directly related to this charge time. In some cases the system may be used to provide air for an additional feature such as an inflator hose for use with tyres or other inflatable items. This places greater demands on the performance required. To meet such stringent requirements with a single compressor requires a relatively large, heavy, high-performance unit, of a type that would be found, for example, in heavy-duty industrial applications.

A large, heavy compressor is undesirable at a time in which vehicle manufacturers are striving to drive down overall weight in order to improve performance and reduce fuel consumption. High-performance compressors generally place greater demands on the materials and components used, and do not lend themselves to high-volume production. As a result, such compressors tend to be relatively large, heavy and expensive. Another frequent problem with large compressors is that they generate relatively high levels of vibration, acoustic noise and electromagnetic noise.

It is an aim of the present invention to provide an air suspension system that alleviates the aforementioned problems.

According to the present invention there is provided a vehicle air suspension system comprising a source of compressed air coupled to one or more air springs, and a controller for controlling flow of compressed air into and out of said air springs, wherein said source comprises a plurality of compressors and said controller is responsive to receipt of signals from said vehicle and/or said air suspension system for controlling said compressors either together as a single unit, or individually depending on the signals received.

It is an advantage that under certain conditions, e.g. normal operating conditions, embodiments of the invention include a system that is able to operate with two or more compressors behaving as a single compressor. This means that the system can be integrated with a conventional or existing controller, using the same control logic, as a single compressor system.

It is a further advantage that, for example, a two-compressor system, when compared with a single compressor system for the same application, has a space envelope that is essentially unchanged, while the weight may be reduced by over 50%. This is because in the two-compressor system, each compressor is only required to operate at a fraction of the performance of the single compressor. The lower performance places less stringent demands on the compressors, their materials and components. This means that smaller "off the shelf" (i.e. produced in high volume) compressors can be used, thereby reducing the size, weight and cost.

It is a further advantage that embodiments of the invention may use smaller compressors, requiring smaller diameter pipe connections and giving rise to a smaller volume of pipework between the compressors and the components that are supplied with compressed air. In addition, smaller compressors take less time to reach their operational duty when they are switched on. These factors result in an improvement in response time compared with single compressor systems.

In a preferred embodiment the signals from the air suspension system include diagnostic signals for indicating a fault condition on each of the compressors.

Preferably, when a fault condition is detected on one of the compressors, the system controller is configured to switch off both the compressors, but is still be able to identify which of the compressors gave rise to the fault, and the nature of the fault condition. This information may be signalled to an engineer with appropriate test equipment and/or to the driver via lamps or an information console.

In another embodiment, if a fault condition is detected on one of the compressors, then the system is able to switch off that compressor, while continuing to operate the air suspension (albeit with a reduced performance) from the other compressor(s). Preferably, continued operation of the other compressor(s) provides load levelling functionality but other functionality requiring a relatively high demand for air is suppressed

In a preferred embodiment, the compressors comprise mechanical components that have a cyclical or reciprocating movement in use, the compressors being arranged such that the component movement in the compressors has a phased relationship so as to minimise vibration and/or acoustic noise arising from the movement.

In embodiments of the invention, the controller may be programmable to control the compressors, either together as a single unit or individually, to provide a given set of functional and environmental requirements. The functional requirements may include: load levelling, variable height settings and accessory air inflator requirements. The environmental requirements may include: electromagnetic compatibility and operating temperature range.

Embodiments of the system may be configured to activate just one compressor at a time, or both, according to the demand for air supply and the response time requirements. An advantage of this arrangement is that more precise control of the air supply can be achieved. If the air suspension system is raising the vehicle to a specified height, for example, more precise control of the air supply results in the specified height being reached more quickly and efficiently.

In embodiments of the system the compressors may have differing performance specifications. A higher performing compressor may be assigned to higher demand functions, and a lower performing compressor to lower demand functions.

In a preferred embodiment, the system is configured for staged activation, wherein the compressors are switched on one after another. It is an advantage that this arrangement significantly reduces the peak electric current that occurs when compressors are switched on.

An embodiment of the system of the invention will now be described by way of example with reference to the accompanying drawings, in which:
Figure 1 is a schematic representation of an air suspension system according to the present invention; and
Figure 2 is a drawing showing a plan view of an air suspension unit forming part of the system of Figure 1.

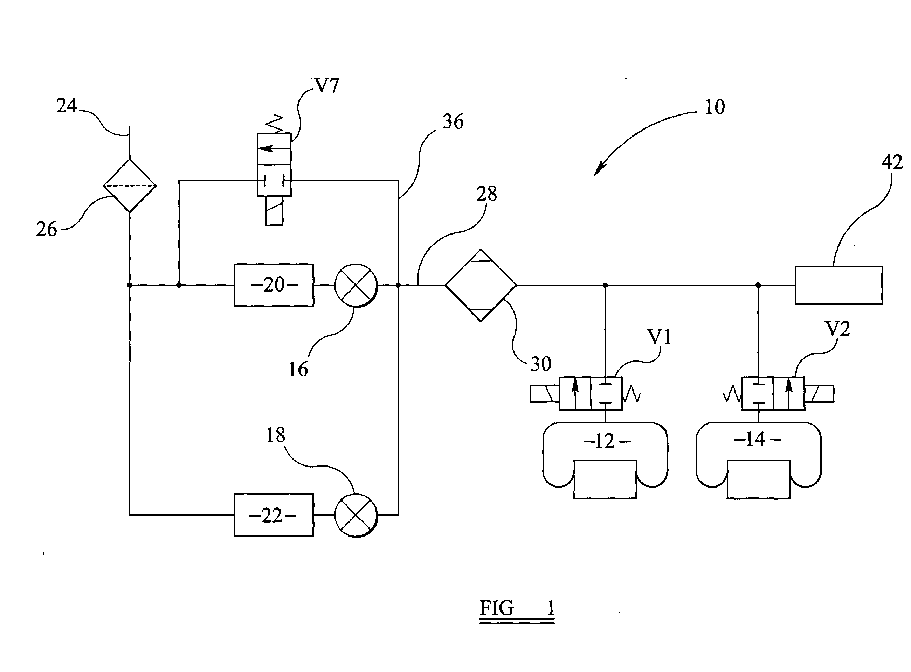

Referring to Figure 1, a vehicle air suspension system 10 is shown having two air springs 12, 14. It will be appreciated that most vehicles having four wheels will be provided with an air spring at each wheel, however, for simplicity only two air springs are shown in Figure 1. Air is supplied to the air springs 12, 14 by way of two compressors 16, 18, each driven by an associated motor 20, 22. Air is taken into the compressors from an inlet 24, through a filter 26. The compressors deliver compressed air to a common line 28 and through a dryer 30. The compressed air in the common line 28 is fed to each air spring 12, 14 by way of an associated solenoid valve V1, V2. A return air path 36 is provided between the common line 28 and the inlet 24, for air to be exhausted from the air springs 12, 14. An exhaust valve V7, which is typically another solenoid valve, controls the flow of air through the return air path 36. The pressure of compressed air in the common line 28 is monitored by way of a pressure transducer 42.

A supplementary air line 39 leads from the common line 28 to a further valve 40, such as a Schraeder valve. Opening of the further valve 40 provides compressed air for an additional feature, such as an inflator hose for use with tyres or other inflatable items.

An electronic control unit (ECU - not shown) has a processor for executing software to control the operation of the motors 20, 22, the solenoid valves V1, V2 and the exhaust valve V7 in response to signals from sensors (not shown) located on the vehicle.

In use, the ECU controls operation of the motors 20, 22 to drive the compressors 16,18 so that air is drawn in through the inlet 24 and filter 26. The compressors 16, 18 supply compressed air to the common line 28. From the sensor signals it receives, the ECU determines when air is required to be supplied to either of the air springs 12, 14. The ECU controls opening of the associated solenoid valve V1, V2 so that compressed air from the compressors 16, 18 flows in the common line 28, through the dryer 30 to the air spring 12, 14. The dryer 30 removes moisture from the compressed air to protect the integrity of the materials of the air springs 12, 14. When the ECU determines that air is to be released from either of the air springs 12, 14, it controls opening of the associated solenoid valve V1, V2 as well as the exhaust valve V7, so that air flows back out through the filter 26 and inlet 24.

The ECU software incorporates a diagnostics facility for detection and indication of system malfunctions. On detection of a fault condition by the diagnostics, a Diagnostic Trouble Code (DTC) is generated. Using an appropriate diagnostic scan tool, a technician is able to display exactly which DTCs are set and so understand the exact nature of the problem.

In the system described, the compressors 16, 18 are each assigned a unique DTC code. The two compressors 16, 18 are managed by the ECU as if they were a single unit at all times except in the event of a malfunction of either unit. If such an event occurs, there is a safety feature whereby the ECU diagnostics facility renders the compressors 16, 18 distinguishable as two distinct units. This enables a service engineer to identify the malfunctioning unit for the purpose of repair or replacement. The features of the fault diagnosis capability are described in more detail later in this application.

This means that the same ECU can be used for control of the dual compressor system as for a conventional single compressor system. There is no need for any change in the control strategy. However, the system has the further advantage that, should a requirement arise, it could be configured so that the two compressors are controlled individually.

The performance requirements for the air suspension system, in particular for the compressor(s) therein, are determined by the vehicle manufacturer's specification. Demands placed on the system may be stringent. A vehicle manufacturer may require, for example, that a short time is taken to charge the air springs or pneumatic dampers or, where used, a reservoir with compressed air. This is because the time taken for the vehicle to be raised between specified height levels (the 'response time') is directly related to this charge time. In addition, a feature such as accessory inflation may be required. To meet such stringent requirements with a single compressor requires a relatively large, heavy, high-performing and, probably a bespoke unit of a type similar to those used in heavy duty industrial applications. A large, heavy compressor is undesirable at a time in which vehicle manufacturers are striving to drive down overall weight in order to improve performance and reduce fuel consumption. Also, high-performing, bespoke compressors are relatively expensive, depending on production volume.

In comparing a dual compressor system developed to meet a specific set of customer requirements with a single compressor system for the same application, the applicant has made the following observations:
- Space envelope is essentially unchanged;
- Weight is reduced by over 50%;
- Overall flow rate from the two compressors results in an improvement in response time relative to the single compressor;
- The cost of the two compressors combined is just 43% of that of the single compressor for the same production volume. The two compressors used on the prototype system are 'off the shelf', as opposed to a bespoke unit for the corresponding single compressor.

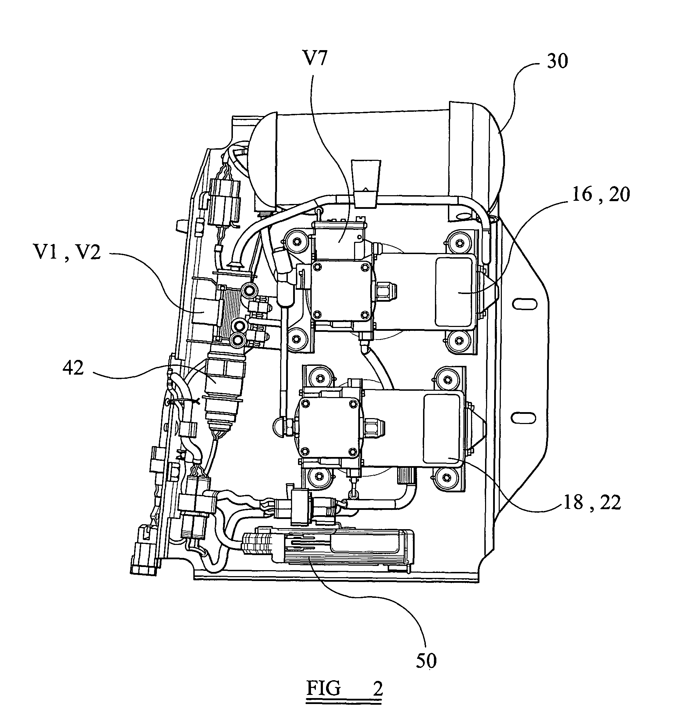

Figure 2 shows a plan view of an air suspension unit constructed in accordance with the schematic representation of Figure 1. Equivalent features have the same reference numerals. The air suspension unit shown in Figure 2 also incorporates an ECU 50 having a microprocessor. This air suspension unit has a similar overall space envelope as a corresponding single compressor unit for the same application, but has all the advantages listed above.

In the exemplary embodiment of Figures 1 and 2, the two compressors 16, 18 are either simultaneously in the ON state or simultaneously in the OFF state. They are switched on and off via a relay controlled by the ECU 50. The air suspension system maintains the height of the vehicle at a 'datum' level, most often the 'Design Ride Height'. This is normally determined by the vehicle manufacturer and is the height level, relative to the ground, at which the suspension of a vehicle at rest should stand.

Many air suspension systems offer variable ride height options. This is achieved by changing the datum level. For example an option may be provided to select a datum level above design ride height to increase ground clearance for traversing over rough or uneven terrain (often referred-to as 'extended ride height').

The ECU 50 contains a control algorithm within its microprocessor. This algorithm includes the conditions under which the compressors are switched on and off. The main reasons for switching-on the compressors are to increase the volume of air in the springs in order to:
(i) raise the vehicle suspension to a higher level (e.g. extended ride height); and
(ii) 'correct upwards' the vehicle height, in the event that it has fallen below the prevailing datum height (e.g. a vehicle standing at design ride height is loaded with heavy goods).

In order to achieve this height control the ECU is provided with input signals from height sensors associated with each of the air springs. For activation of height control actions, the input signal of most importance to the ECU is that from the associated height sensor. However the ECU will receive other input signals (e.g. vehicle speed status), either directly from sensors on the vehicle or indirectly via a vehicle data bus. These signals are processed by the ECU control algorithm and the actions of the ECU in response will depend on the situation (e.g. for extended ride height to be selectable, the control algorithm may include a proviso that the vehicle speed is below a prespecified level).

As mentioned above, in certain circumstances it can be advantageous for the compressors to be individually controllable. In such circumstances the system can be configured to provide for a variety of control features - some of which are outlined below.

For each vehicle platform there is a given set of functional and environmental requirements for the air suspension system, this is specified by the vehicle manufacturer. Examples of functional requirements include: load levelling, variable height settings and accessory air inflator requirements. Examples of environmental requirements include: electromagnetic compatibility and operating temperature range.

Individual control of the compressors provides the potential for essentially the same air suspension system configuration to be adapted to suit different vehicle platforms, with the manufacturer's specifications determining the control strategy programmed into the ECU.

As already described, in the event of a fault in one compressor, the system can continue to function with the other. This provides for a "limp home mode", whereby in the event of a malfunction of a compressor the driver is notified via the system diagnostics but the system continues to provide load levelling functionality (it can still correct height upwards with one compressor). In this mode, however, it may be necessary to suppress functionality requiring relatively high demand in terms of air supply such as extended ride height and accessory air inflation.

It is also possible to activate just one compressor at a time, or both, according to the demand for air supply and the response time requirements. For example, when the system activates the compressors in order to inflate the air springs for raising the suspension to a given height, demand for air is relatively high (switch on both compressors) until the actual height of the suspension is close to the required height at which point it becomes relatively low (switch off one compressor and use one only). A strategy such as this would help to prevent a situation where the required height is overshot and the system then has to release air from the springs to correct the height downwards back towards the required height.

Another possibility, depending on air demand and the performance of the compressors, is to activate them alternately whilst providing a continuous supply of air. For example one compressor only is activated for a specified time, or until a specified temperature is reached, at which point it is switched off and the other compressor is immediately switched on. This cycle repeats for as long as air supply is required and so each compressor operates with a greatly reduced duty cycle.

Compressors of differing performance specification may be chosen, in which case the higher performing unit could be assigned to higher demand functions, and similarly the lower performing unit to lower demand functions. A feature such as this would be useful where, for example, the air suspension system is 'four point' (having an air spring at each 'comer' of the vehicle) and the springs at the front of the vehicle support a significantly different weight to those at the rear. The higher-performing of the compressors serves those springs supporting the greater weight, whilst the lower performing compressor serves the springs supporting the lower weight.

When a compressor is switched on, the electric current flow through the motor windings is initially relatively high before settling (after around 100ms) to a much lower operating level. This is commonly known as 'inrush current' and has a typical value of the order 50 - 100A. With a two-compressor system having individually switchable units, it can be shown that staged switching of the two significantly reduces the peak inrush current.

In summary, a system having more than one compressor where each is individually controllable enables the system to maintain functionality when one compressor malfunctions or becomes inoperable. The control strategy can be designed to optimise switching of the compressors (just one or more than one activated at a given time) according to the demand for air. This configuration provides many options in terms of the choice of compressor performance specification and the overall configuration of the system.

## Claims

1. A vehicle air suspension system (10) comprising a source of compressed air coupled to one or more air springs (12, 14), and a controller for controlling flow of compressed air into and out of said air springs, wherein said source comprises a plurality of compressors (16, 18) and said controller is responsive to receipt of signals from said vehicle and/or said air suspension system (10) for controlling said compressors either together as a single unit, or individually, depending on the signals received.

2. A system according to claim 1, configured to operate with two or more compressors (16, 18) being controlled as a single compressor.

3. A system according to claim 1 or claim 2, wherein the signals from the air suspension system (10) include diagnostic signals for indicating a fault condition on a compressor (16, 18).

4. A system according to claim 3, wherein, when a fault condition is detected on one of the compressors (16), the controller is configured to switch off the compressors (16, 18), but is still be able to identify which of the compressors gave rise to the fault, and the nature of the fault condition.

5. A system according to claim 4, wherein a signal is provided to an output for indicating fault information on appropriate test equipment and/or to the driver of the vehicle.

6. A system according to claim 3, wherein, when a fault condition is detected on one of the compressors (16), the system is configured to switch off that compressor, while continuing to operate the air suspension system (10) from the other compressor(s) (18).

7. A system according to any preceding claim, wherein the compressors (16, 18) comprise mechanical components that have a cyclical or reciprocating movement in use, the compressors being arranged such that the component movements in the compressors have a phased relationship with one another so as to minimise vibration and/or acoustic noise and/or electromagnetic noise arising from the movements.

8. A system according to any preceding claim wherein the controller is programmable to control the compressors (16, 18), either together as a single unit or individually, to provide a given set of functional and environmental requirements.

9. A system according to claim 6, wherein the continued operation of the other compressor(s) (18) provides load levelling functionality but other functionality requiring a relatively high demand for air is suppressed.

10. A system according to any preceding claim, configured to activate just one compressor (16, 18) at a time, or both, according to the demand for air supply and the response time requirements.

11. A system according to any preceding claim configured to activate the compressors (16, 18) alternately whilst providing a continuous supply of air.

12. A system according to any preceding claim, wherein the compressors (16, 18) have differing performance specifications.

13. A system according to any preceding claim configured for staged activation of the system wherein the compressors (16, 18) are switched one after another.

14. An air suspension unit for a vehicle having a controller for controlling flow of compressed air into and out of air springs (12, 14) in response to receipt of signals from said vehicle, wherein the unit comprises a plurality of compressors (16, 18) configured to be controlled either together as a single unit, or individually, depending on the signals received by the controller.

15. A method of controlling a vehicle air suspension system (10) that comprises a plurality of air compressors (16, 18), the method comprising:
receiving signals from said vehicle and/or said air suspension system; and
activating said compressors (16, 18) either together as a single unit, or individually, depending on the signals received.
